# EUROPÄISCHE PATENTSCHRIFT

(11) **EP 0 776 805 B1**
(45) Veröffentlichungstag und Bekanntmachung des Hinweises auf die Patenterteilung: **19.12.2001**
(21) Anmeldenummer: 96117213.7
(22) Anmeldetag: 26.10.1996
(51) Int. Cl.: B60T 1/087, F16D 57/04

(54) **Antriebseinheit**
Drive unit
Unité d'entraînement

(30) Priorität: 28.11.1995 DE 19544189
(43) Veröffentlichungstag der Anmeldung: 04.06.1997
(73) Patentinhaber: Voith Turbo GmbH & Co. KG, 89522 Heidenheim (DE)
(72) Erfinder: Adams, Werner, 74564 Crailsheim (DE); Edelmann, Peter, 89522 Heidenheim (DE); Friedrich, Jürgen, 74564 Crailsheim (DE); Heilinger, Peter, 74564 Crailsheim (DE); Rose, Peter, 74523 Schwäbisch Hall (DE); Vogelsang, Klaus, 74564 Crailsheim (DE)
(74) Vertreter: Dr. Weitzel & Partner

(56) Entgegenhaltungen:
- DE-A- 1 575 798
- DE-A- 2 536 805
- US-A- 3 297 114
- US-A- 3 367 461

## Beschreibung

Die Erfindung betrifft eine Antriebseinheit für ein Kraftfahrzeug mit einem Motor, einem hydrodynamischen Retarder und einem Getriebe.

Retarder spielen bei Antriebsanlagen von Fahrzeugen eine immer wichtigere Rolle. Sie sind in den Antriebsstrang integriert. Der Retarder wird beim Einsatz im Kraftfahrzeug - aber auch bei Anlagen mit stark wechselndem Betrieb - durch Füllen und Entleeren des beschaufelten Arbeitskreislaufes mit einem Arbeitsmedium ein- oder ausgeschaltet. Als Arbeitsmedium kommen z.B. Öl oder Wasser in Betracht. Leistet der Retarder Bremsarbeit, so wird das Arbeitsmedium erwärmt. Die Wärme muß durch einen Kühler abgeführt werden.

Antriebseinheiten von Kraftfahrzeugen haben in der Regel weitere Aggregate, die eine Kühlung benötigen. Hierbei ist beispielsweise an den Motor, die mechanischen Bremsen, an die Kupplung oder an das Getriebe zu denken. Diese anderen Aggregate können ebenfalls einen Kühlkreislauf aufweisen. Es ist bekannt, bei einer Antriebsanlage für Fahrzeuge den Retarder mit Wasser zu betreiben, das gleichzeitig als Kühlwasser dient. Dabei kann der Retarder im Nicht-Bremsbetrieb wahlweise als Pumpe verwendet werden und das Arbeitsmedium des Retarders, gleichzeitig als Kühlmedium für andere Aggregate der Antriebseinheit dienen.

D 195 09 417 A1 zeigt und beschreibt einen Antriebsstrang für ein Kraftfahrzeug mit einem Motor, einem Getriebe und einem Retarder. Dabei ist der Retarder in das Getriebeendgehäuse integriert.

US-A-3 367 461 beinhaltet einen Antriebsstrang eines Kraftfahrzeuges mit einem Motor, einem Getriebe und einem Retarder, wobei Motor und Getriebe über eine Kupplung miteinander verbunden sind, und der. Retarder seitlich am Getriebe angeflanscht ist.

Der Erfindung liegt die Aufgabe zugrunde, einen solchen Antriebsstrang dahingehend weiterzuverbessern, daß Fertigung und Montage von Retarder und Getriebe noch einfacher, rationeller und damit kostengünstiger werden.

Diese Aufgabe wird durch die Merkmale von Anspruch 1 gelöst.

Anders als bei der genannten Druckschrift wird gemäß der Erfindung die Anordnung so getroffen, daß der Retarder als selbständige Baueinheit auf die Retarderwelle aufsteckbar ist. Die Retarderwelle wird nunmehr in einem Wandteil gelagert, das Bestandteil des Getriebegehäuses ist. Die Retarderwelle ist in diesem Wandteil gelagert und ragt über das Wandteil hinaus, so daß es den komplett vormontierten Retarder durch Aufstecken aufnehmen kann. In das genannte Wandteil ist außerdem eine Dichtung integriert, die eine Doppelfunktion hat: Zum einen dichtet sie gegen das Getriebeöl ab, zum anderen gegen das Arbeitsmedium des Retarders. Der Retarder kann mit einem anderen Arbeitsmedium betrieben werden als Öl. In diesem Falle muß dafür gesorgt werden, daß die beiden Medien, nämlich das Arbeitsmedium des Retarders einerseits und das Schmiermittel des Getriebes andererseits nicht in leitender Verbindung miteinander stehen. Dies wird durch die genannte Dichtung erreicht. Dies schließt natürlich nicht aus, daß beide Medien miteinander identisch sind, so daß auch der Retarder mit Öl als Arbeitsmedium betrieben wird.

Die Erfindung ist anhand der Zeichnung näher erläutert.

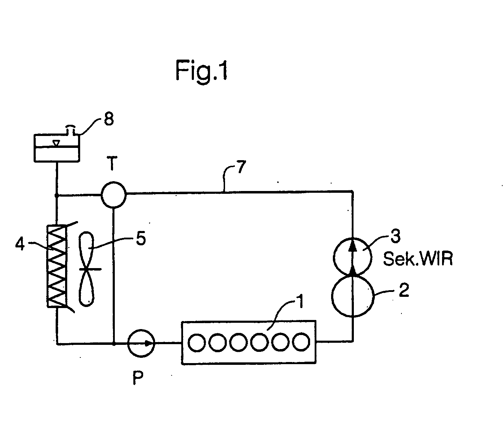

In Figur 1 ist schematisch ein Antriebsstrang dargestellt, umfassend einen Motor 1, ein Getriebe 2, einen hydrodynamischen Retarder 3 mit einem Kühlmedium als Arbeitsmedium, einen Wärmetauscher 4, einen diesem zugeordneten Lüfter 5, eine Umwälzpumpe 6, Kühlwasserleitungen 7 sowie einen Ausgleichsbehälter 8.

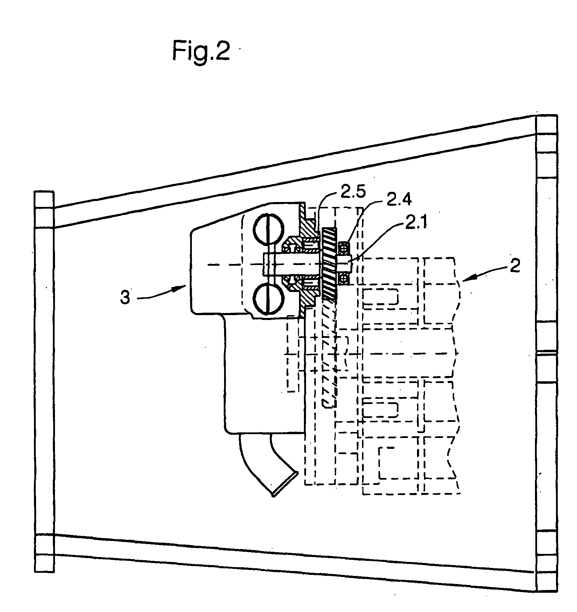

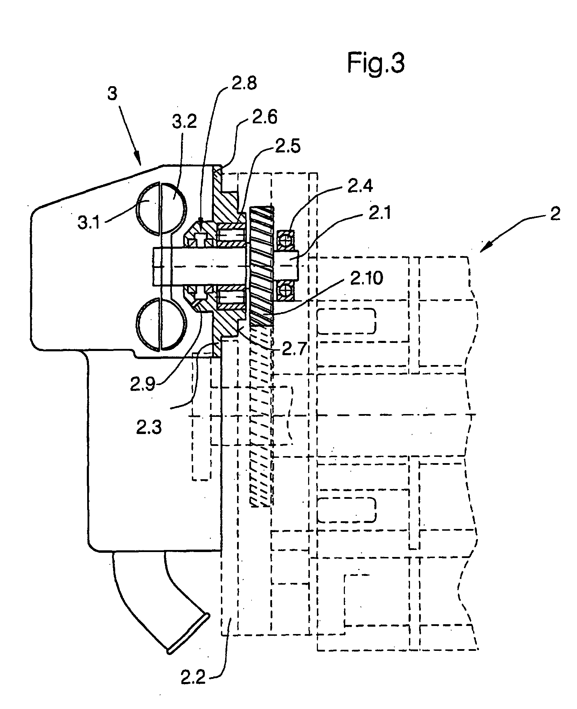

Figur 2 zeigt in einer Teilansicht die erfindungsgemäße Anordnung mit gestrichelt dargestellten Teilen des Getriebes 2 und mit dem Retarder 3. Der Retarder weist ein Rotorschaufelrad 3.1 sowie ein Statorschaufelrad 3.2 auf. Er ist auf einer Welle 2.1 gelagert. Welle 2.1 ist ihrerseits unter anderem in einer Außen-Wandung des Getriebes 2 gelagert. Dies ergibt sich noch genauer aus Figur 3.

Das Getriebe 2 weist ein Gehäuse 2.2 auf. In die Gehäusewandung ist ein Deckel 2.3 eingesetzt. Deckel 2.3 ist mit der übrigen Gehäusewandung des Getriebegehäuses 2.2 verschraubt und hierbei gegen dieses abgedichtet. Die Retarderwelle 2.1 ist mittels zweier Lager 2.4 und 2.5 gelagert. Dabei befindet sich Lager 2.4 innerhalb des vom Getriebegehäuse 2.2 umschlossenen Raumes, während Lager 2.5 in Deckel 2.3 angeordnet ist.

Retarder 3 ist als selbständige Baueinheit vormontiert und auf die Retarderwelle 2.1 von außen her aufgesteckt. Es ist denkbar, Retarder 3 teilmontiert aufzustecken.

Deckel 2.3 weist eine äußere Begrenzungsfläche 2.6 auf, auf welche die Retarder-Baueinheit 3 aufgesetzt ist, ferner eine innere Begrenzungsfläche 2.7, die in eine entsprechende Aussparung des Retardergehäuses 2.2 eingefügt ist.

Deckel 2.3 trägt außerdem eine Dichtung 2.8. Diese Dichtung 2.8 hat eine Doppelfunktion: Sie dichtet den Ringspalt zwischen Deckel 2.3 und Retarderwelle 2.1 einerseits gegen das Getriebeöl ab und andererseits gegen das Arbeitsmedium des Retarders 3, in diesem Falle ein Kühlmedium. Die Dichtung kann als einziges Element oder als Doppelelement ausgebildet sein.

Man erkennt ferner eine Leckagebohrung 2.9 in Deckel 2.3. Diese dient der Abfuhr von Leckflüssigkeit nach außen.

Die Retarderwelle 2.1 trägt ferner ein Ritzel 2.10. Dies ist Bestandteil eines Hochganges, mit dem die Retarderwelle 2.1 auf höhere Drehzahlen gebracht wird.

Beim Retarder 3 können Rotorschaufelrad 3.1 und Statorschaufelrad 3.2 in axialer Richtung vertauscht werden, so daß gegenüber der Darstellung gemäß Figur 3 das Rotorschaufelrad 3.1 dem Deckel 2.3 näher ist als das Statorschaufelrad.

## Patentansprüche

1. Antriebseinheit für ein Kraftfahrzeug;
1.1 mit einem Motor (1);
1.2 mit einem Getriebe (2), das ein Getriebegehäuse (2.2) aufweist;
1.3 mit einem Retarder (3), der einen Rotor (3.1) und einen Stator (3.2) aufweist;
**gekennzeichnet durch** die folgenden Merkmale:
1.4 es ist eine Retarderwelle (2.1) vorgesehen, die im Getriebe gelagert und von wenigstens zwei Lagern (2.4, 2.5) getragen ist;
1.5 die Retarderwelle (2.1) ragt frei über die Außenwandung (2.3) des Getriebegehäuses (2.2) hinaus;
1.6 auf der Retarderwelle (2.1) befindet sich an der Außenwandung (2.3) des Getriebegehäuses (2.2) wenigstens ein Dichtelement (2.9);
1.7 das Dichtelement dichtet den Spaltraum zwischen der Retarder welle (2.1) und der Außenwandung (2.3) einerseits gegen das Getriebeöl und andererseits gegen das Arbeitsmedium des Retarders ab;
1.8 das Schmiermittel des Getriebes (2) ist vom Arbeitsmedium des Retarders getrennt.

2. Antriebseinheit nach Anspruch 1, **dadurch gekennzeichnet, daß** derjenige Teil der Außenwandung (2,3), der den Retarder bzw. die Retarderwelle trägt, als Deckel ausgebildet und mit dem übrigen Getriebegehäuse (2.2) verbunden ist.

3. Antriebseinheit nach Anspruch 1 oder 2, **dadurch gekennzeichnet, daß** die Retarderwelle (2.1) zugleich ein Ritzel (2.10) eines Hochganges trägt.

4. Antriebseinheit nach Anspruch 3, **dadurch gekennzeichnet, daß** das Ritzel (2.10) in axialer Richtung auf der einen oder der anderen der beiden Lager (2.4, 2.5) der zwischen diesen beiden Lagern angeord net ist.

5. Antriebseinheit nach einem der Ansprüche 1 bis 4, **dadurch gekennzeichnet, daß** die Retarderwelle (2.1) eine Hohlwelle ist.

## Claims

1. Drive unit for a motor vehicle;
1.1 with a motor (1);
1.2 with a gearing (2) which has a gearing housing (2.2);
1.3 with a retarder (3), which has a rotor (3.1) and a stator (3.2);
**characterised by** the following features:
1.4 a retarder shaft (2.1) is provided which is mounted in the gearing and is supported by at least two bearings (2.4, 2.5);
1.5 the retarder shaft (2.1) projects freely beyond the outer wall (2.3) of the gearing housing (2.2);
1.6 at least one sealing element (2.9) is located on the retarder shaft (2.1) on the outer wall (2.3) of the gearing housing (2.2);
1.7 the sealing element seals the gap between the retarder shaft (2.1) and the outer wall (2.3), on the one hand, against gear lubricant oil and, on the other hand, against the working medium of the retarder;
1.8 the lubricant of the gearing (2) is separated from the working medium of the retarder.

2. Drive unit according to claim 1, **characterised in that** the part of the outer wail (2.3) which supports the retarder or the retarder shaft is designed as a cover and is connected to the remaining gearing housing (2.2).

3. Drive unit according to claim 1 or 2, **characterised in that** the retarder shaft (2.1) simultaneously supports a higher gear pinion (2.10).

4. Drive unit according to claim 3, **characterised in that** the pinion (2.10) is arranged in the axial direction on one or the other of the two bearings (2.4, 2.5) or between these two bearings.

5. Drive unit according to one of claims 1 to 4, **characterised in that** the retarder shaft (2.1) is a hollow shaft.

## Revendications

1. Unité de propulsion pour un véhicule automobile ;
1.1 avec un moteur (1) ;
1.2 avec une boîte de vitesses (2) qui comporte un carter de boîte de vitesses (2.2)
1.3 avec un ralentisseur (3) qui comprend un rotor (3.1) et un stator (3.2) ;
**caractérisée par** les caractéristiques suivantes :
1.4 il est prévu un arbre de ralentisseur (2.1) qui est monté dans la boîte de vitesses et est supporté par au moins deux paliers (2.4, 2.5) ;
1.5 l'arbre de ralentisseur (2.1) fait saillie librement vers l'extérieur à travers la paroi extérieure (2.3) de la boîte de vitesses (2,2) ;
1.6 sur l'arbre de ralentisseur (2.1), au niveau de la paroi extérieure (2.3) du carter de boîte de vitesse, se trouve au moins un élément d'étanchéité (2.9) ;
1.7 l'élément d'étanchéité assure l'étanchéité de l'espace entre le ralentisseur (2.1) et la paroi extérieure (2.3) d'une part vis-à-vis de l'huile de boîte vitesses et d'autre part vis-à-vis du fluide de travail du ralentisseur ;
1.8 l'huile de lubrification de la boîte de vitesses (2) est séparée du fluide de travail du ralentisseur.

2. Unité de propulsion selon la revendication 1, **caractérisée en ce que** la partie de la paroi extérieure (2.3) qui porte le ralentisseur ou l'arbre de ralentisseur est conformée en couvercle et est liée à l'autre carter de boîte de vitesses (2.2).

3. Unité de propulsion selon la revendication 1 ou 2, **caractérisée en ce que** l'arbre de ralentisseur (2.1) ports simultanément un pignon (2.10) d'une vitesse démultipliée.

4. Unité de propulsion selon la revendication 3, **caractérisée en ce que** le pignon (2.10), vu dans la direction axiale, est monté sur l'un ou l'autre des deux paliers (2.4, 2.5) ou est disposé entre les deux paliers.

5. Unité de propulsion selon une des revendications 1 à 4, **caractérisée en ce que** l'arbre de ralentisseur (2.1) est un arbre creux.
